# EUROPEAN PATENT SPECIFICATION

(11) **EP 0 491 563 B1**
(45) Date of publication and mention of the grant of the patent: **12.02.1997**
(21) Application number: 91311753.7
(22) Date of filing: 18.12.1991
(51) Int. Cl.: G11B 20/18, G11B 27/36

(54) **Information recording/reproducing apparatus**
Informations-Aufnahme/Wiedergabegerät
Appareil d'enregistrement et de reproduction d'information

(30) Priority: 18.12.1990 JP 403099/90
(43) Date of publication of application: 24.06.1992
(73) Proprietor: PIONEER ELECTRONIC CORPORATION, Meguro-ku Tokyo-to (JP)
(72) Inventor: Yamada, Shinya, c/o Pioneer Electronic Corporation, Tokorozawa-shi, Saitama-ken (JP)
(74) Representative: Brunner, Michael John

(56) References cited:
- EP-A- 0 234 709
- EP-A- 0 348 218
- EP-A- 0 397 126
- GB-A- 2 137 799
- US-A- 4 638 374
- US-A- 4 942 609
- PATENT ABSTRACTS OF JAPAN vol. 12, no. 429 (P-785)(3276) 14 November 1988

## Description

### Field of the Invention:

The present invention relates to an information reproducing apparatus, such as a CD (compact disk) player, a LVD (laser vision disc) player, a VTR (video tape recorder), a DAT (digital audio tape recorder), or the like, for reproducing recorded digital information from a storage medium, such as a CD, an LVD, a magnetic tape, or the like, and more particularly to such an information reproducing apparatus which can process a defect or dropout of a reproduced signal due to a smear, a damage, or the like of the storage medium.

### Description of the Prior Art:

When one wants to edit his own original tape with a combination of favorite pieces of music recorded thereon, he usually dubs reproduced output signals of a CD player, for example, on a compact cassette tape or a digital audio tape (DAT). To dub desired signals on a tape, the output terminal of the CD player is connected to the input terminal of a cassette deck or a DAT by a signal cable. Then, the CD inserted in the CD player is played back to apply reproduced output signals to the cassette deck or the DAT wherein the singals are recorded on the tape through a recording head in the cassette deck or the DAT.

One problem with such a dubbing process is that it is difficult to find, in advance, the presence of any defect such as a smear, or the like on the information recording surface of the CD, and that even if the presence of any defect is known beforehand, the user cannot tell exactly where the defect is located on the CD.

When recorded information is dubbed from a CD which contains a defect onto a tape, and the defect is reached by the pickup of the CD player, the CD player fails to play back the CD because the pickup jumps back due to the defect. The user knows the presence of the defect only when the pickup jumps back. In the event of such an operation failure, the user is required to rewind or re-edit the tape.

If the defect is a scratch or the like that is small enough not to cause the pickup to jump back, then the defect may not be brought to the user's attention during the dubbing process. The user becomes aware of the defect only when the recorded tape is played back. When this happens, the user is also required to re-edit the tape.

### SUMMARY OF THE INVENTION

It is an object of the present invention to provide an information reproducing apparatus which is capable of detecting a defect on an information storage medium and indicating exactly where the defect is located on the information storage medium.

US-A-4638374, EP-A-0397126 and GB-A-2137799 all disclose defect detecting apparatus for a recording media, the apparatus having defect position detection.

EP-A-0348218 discloses a video recording apparatus with recording control.

According to the present invention, there is provided an information reproducing and recording system comprising a reproducing section and a recording section, said reproducing section comprising:
reading/reproducing means for reading information from an information storage medium which stores recorded information and positional information indicative of a recording position of the recorded information and for outputting a reproduced signal representative of the recorded information;
defect detecting means for detecting a defect on said information storage medium based on the reproduced signal, and for outputting a defect signal accordingly;
positional information reproducing means for reproducing defect positional information representative of the position of the defect on said information storage medium based on the defect signal;
memory means for storing the defect positional information; and
reproduction control means for controlling the reproduction of said reproducing means based on the defect positional information stored by said memory means; characterised by said recording section comprising:
recording means for receiving and recording the recorded information reproduced by the reading/reproducing means on an information recording medium; and
recording control means for receiving the defect positional information stored by said memory means and controlling the recording by said recording means based on the defect positional information.

The above and other objects, features, and advantages of the present invention will become apparent from the following description when taken in conjunction with the accompanying drawings which illustrate the present invention by way of example.

In the drawings:-
FIG. 1 is a block diagram of an information reproducing apparatus employed in the present invention;
FIG. 2 is a block diagram of a further information reproducing apparatus employed in the present invention;
FIG. 3 is a block diagram of a further information reproducing apparatus employed in the present invention;
FIG. 4 is a detailed block diagram of an information reproducing apparatus employed in the present invention;
FIG. 5 is a block diagram of a defect detector;
FIG. 6 is a diagram showing signals in the defect detector;
FIG. 7 is a flowchart of an operation sequence of the information reproducing apparatus shown in FIG. 4;
FIG. 8 is a block diagram of an information reproducing apparatus according to the present invention; and
FIG. 9 is a detailed block diagram of the still another embodiment shown in FIG. 8.

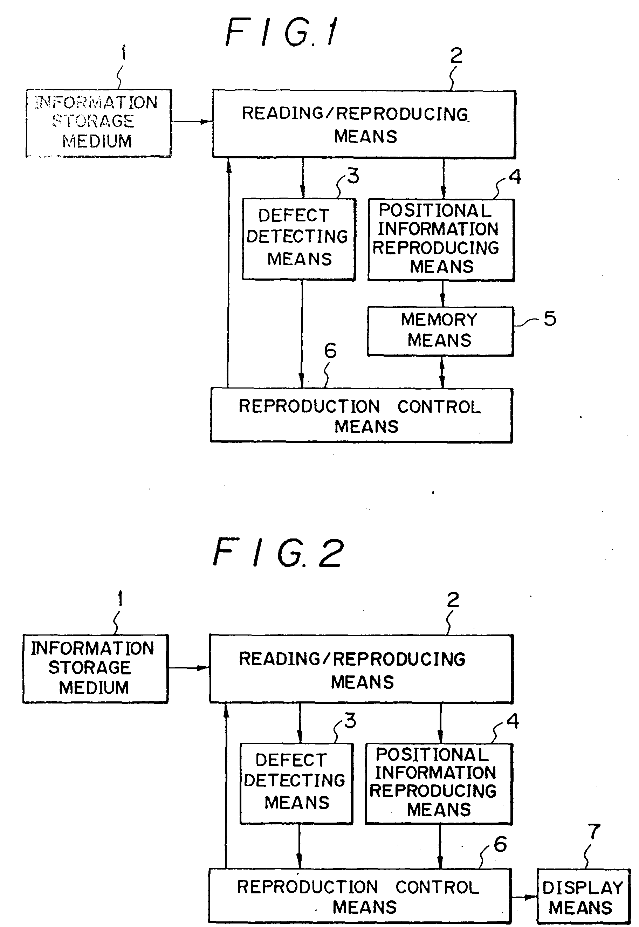

FIG. 1 shows in block form an information reproducing apparatus employed in the present invention. As shown is FIG. 1, the information reproducing apparatus comprises a reading/reproducing means 2 for reading and reproducing recorded information from an information storage medium 1 which also stores positional information, a defect detecting means 3 for detecting a defect on the information storage medium 1 based on a reproduced signal, representative of the reproduced recorded information, produced by the reading/reproducing means 2, a positional information reproducing means 4 for reproducing the positional information, representative of the position of the defect on the information storage medium, from the information storage medium 1 based on a detected signal, representative of the detected defect, from the defect detecting means 3 and the reproduced signal, a memory means 5 for storing the reproduced positional information from the positional information reproducing means 4, and a reproduction control means 6 for controlling operation of the reading/reproducing means 2 based on the reproduced positional information stored by the memory means 5.

The defect detecting means 3 detects the defect on the information storage medium 1 based on the reproduced signal from the reading/reproducing means 2, and outputs the detected signal representative of the detected defect. The positional information reproducing means 4 reproduces the positional information representative of the detected defect, i.e., detects the position of the defect, based on the detected signal and the reproduced signal. The reproduced positional information is then stored in the memory means 5. The reproduction control means 6 reads the positional information from the memory 5, and controls the reading/reproducing means 2 to stop its reproducing operation, for example, based on the reproduced positional information read from the memory means 5.

FIG. 2 shows in block form a further information reproducing apparatus employed in the present invention. As shown in FIG. 2, the information reproducing apparatus comprises a reading/reproducing means 2 for reading and reproducing recorded information from an information storage medium 1 which also stores positional information, a defect detecting means 3 for detecting a defect on the information storage medium 1 based on a reproduced signal, representative of the reproduced recorded information, produced by the reading/reproducing means 2, a positional information reproducing means 4 for reproducing the positional information, representative of the position of the defect on the information storage medium, from the information storage medium 1 based on a detected signal, representative of the detected defect, from the defect detecting means 3 and the reproduced signal, a display means 7 for displaying the reproduced positional information from the positional information reproducing means 4, and a reproduction control means 6 for controlling operation of the reading/reproducing means 2 based on the reproduced positional information.

The defect detecting means 3 detects the defect on the information storage medium 1 based on the reproduced signal from the reading/reproducing means 2, and outputs the detected signal representative of the detected defect. The positional information reproducing means 4 reproduces the positional information representative of the detected defect, i.e., detects the position of the defect, based on the detected signal and the reproduced signal. The reproduced positional information is then displayed by the display means 7. The reproduction control means 6 controls the reading/reproducing means 2 to stop its reproducing operation, for example, based on the reproduced positional information.

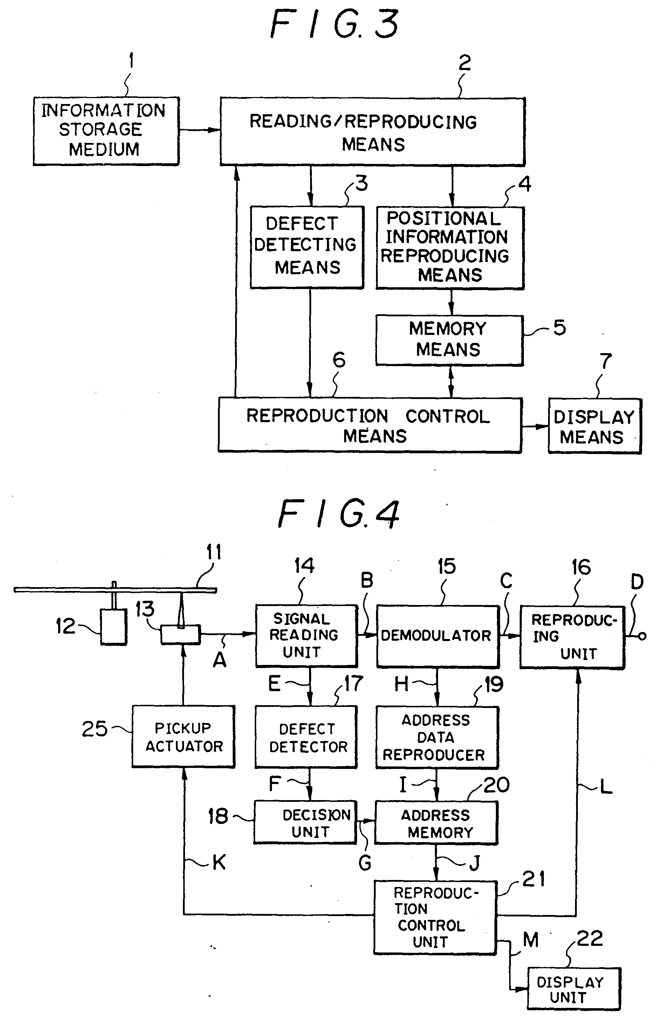

FIG. 3 shows in block form a further information reproducing apparatus employed in the present invention. As shown in FIG. 3, the information reproducing apparatus comprises a reading/reproducing means 2 for reading and reproducing recorded information from an information storage medium 1 which also stores positional information, a defect detecting means 3 for detecting a defect on the information storage medium 1 based on a reproduced signal, representative of the reproduced recorded information, produced by the reading/reproducing means 2, a positional information reproducing means 4 for reproducing the positional information, representative of the position of the defect on the information storage medium, from the information storage medium 1 based on a detected signal, representative of the detected defect, from the defect detecting means 3 and the reproduced signal, a display means 7 for displaying the reproduced positional information from the positional information reproducing means 4, a memory means 5 for storing the reproduced positional information from the positional information reproducing means 4, and a reproduction control means 6 for controlling operation of the reading/reproducing means 2 based on the reproduced positional information stored by the memory means 5.

The defect detecting means 3 detects the defect on the reproduced signal from the reading/reproducing means 2, and outputs the detected signal representative of the detected defect. The positional information reproducing means 4 reproduces the positional information representative of the detected defect, i.e., detects the position of the defect, based on the detected signal and the reproduced signal. The reproduced positional information is then stored in the memory means 5 and displayed by the display means 7. The reproduction control means 6 reads the positional information from the memory means 5, and controls the reading/reproducing means 2 to stop its reproducing operation, for example, based on the reproduced positional information read from the memory means 5.

The information reproducing apparatus shown in FIG. 1, 2, and 3 can be implemented by a circuit arrangement shown in FIG. 4.

FIG. 4 shows in detailed block form an information reproducing apparatus employed in the present invention. As shown in FIG. 4, information such as music information is recorded on an optical disc 11 such as a CD or the like. The optical disc 11 is rotated about its own axis by a spindle motor 12. While the optical disc 11 is being rotated, the recorded information is optically read from the optical disc 11 by an optical pickup 13. Specifically, the optical pickup 13 applies a laser beam to the information recording surface of the optical disc 11, deflects a reflected beam, indicative of the recorded information, from the optical disc 11, converts the detected beam into an electric signal, and outputs the electric signal as an RF signal A. The RF signal A is then sent to a signal reading unit 14.

The signal reading unit 14 amplifies the supplied RF signal A, and shapes the amplified RF signal A into a proper digital signal B, which is applied to a demodulator 15.

Since the recorded information on the optical disc 11 has been modulated according to EFM (Eight to Fourteen Modulation) during the mastering of the optical disc 11, the demodulator 15 demodulates the digital signal B and corrects errors contained in the digital signal B, thus producing a demodulated signal C. The demodulated signal C is then applied to a reproducing unit 16.

The reproducing unit 16 converts the demodulated digital signal C into an analog signal and removes noise therefrom, producing an analog reproduced signal D. The analog reproduced signal D is thereafter amplified and applied to a loudspeaker, which reproduces the sound.

The optical pickup 13, the signal reading unit 14, the demodulator 15, and the reproducing unit 16 jointly serve as the reading/reproducing means 2.

The optical pickup 13, the signal reading unit 14, the demodulator 15, and the reproducing unit 16 described above are of conventional nature and contained in ordinary CD players or the like. In addition to the above components, the information reproducing apparatus employed in the present invention comprises other components as follows:

The information reproducing apparatus includes a defect detector 17 for detecting a defect present on the optical disc 11 based on the RF signal E that is supplied from the signal reading unit 14.

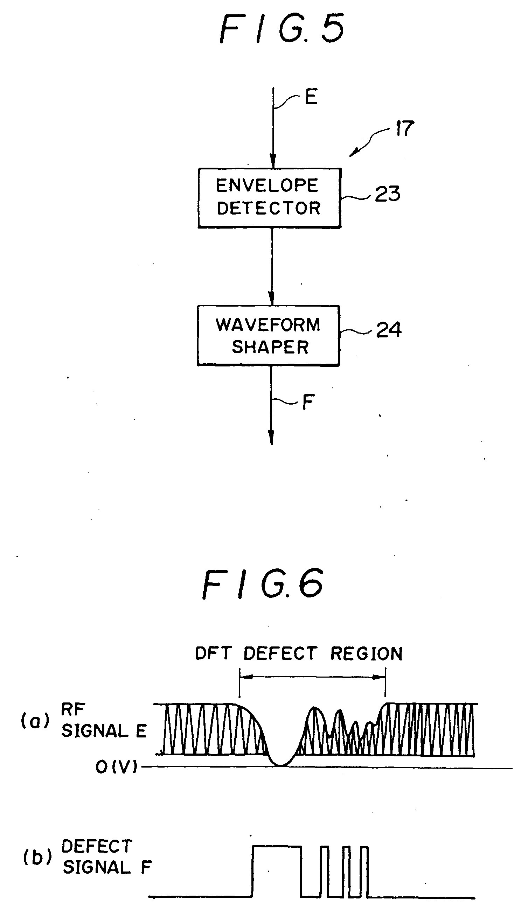

FIG. 5 shows the defect detector 17 in detail. As shown in FIG. 5, the defect detector 17 includes an envelope detector 23 and a waveform shaper 24. The envelope detector 23 may comprise a suitable envelope detecting circuit for detecting the envelope of the RF signal E. The waveform shaper 24 shapes the waveform of an output signal from the envelope detector 23, and generates a pulse signal representative of a defect. More specifically, if the information recording surface of the optical disc 11 contains a defect such as a smear, a damage, a scratch, or the like, the defect does not properly reflect the laser beam transmitted from the optical pickup 13, and the RF signal E produced by the signal reading unit 14 contains a defect region DFT representative of the defect, as shown in FIG. 6(a). When the RF signal E containing the defect region DFT is compared with a suitable slice level, a signal exceeding the slice level is produced. This signal is outputted as a defect signal F (see FIG. 6(b)) corresponding to the defect region DFT from the waveform shaper 24 to a decision unit 18 (FIG. 4).

The decision unit 18 serves to determine whether or not the applied defect signal F represents a defect that is to be stored or displayed. The defect signal F should be stored or displayed if the duration of the defect signal F is of a predetermined reference duration or longer, adversely affecting the reproducing sound quality. The decision unit 18 therefore may comprise a circuit for comparing the duration of the defect signal F with the reference duration. If the defect signal F is to be stored or displayed, then the decision unit 18 outputs a decision signal G as an enable signal to an address memory 20.

The demodulated signal produced by the demodulator 15 is also supplied as a signal H to an address data reproducer 19 that reproduces address data I contained in the demodulated signal H. In the case where the frame structure of the data of the demodulated signal H is known, since the positions of address bits of the frame are known, the address bits are reproduced as the address data I. The reproduced address data I is then transmitted to an address memory 20.

The address memory 20 comprises a rewritable memory such as a RAM (Random Access Memory). The address memory 20 stores address data I at the time a decision signal G from the decision unit 18 is applied as an enable signal to the address memory 20.

A reproduction control unit 21 comprises a microprocessor, for example. When the decision signal G from the decision unit 18 is applied, indicating a defect on the optical disc 11, the reproduction control unit 21 reads corresponding address data J from the address memory 20, and sends a display control signal M to a display unit 22 to display the address J on the display unit 22. If the optical disc 11 cannot be played back due to the defect thereon, the reproduction control unit 21 supplies a reproduction control signal L to the reproducing unit 16 and also supplies a pickup control signal K to the pickup actuator 25, stopping the playback operation of the information reproducing apparatus.

If necessary, the reproduction control unit 21 may send the reproduction control signal L or the pick up control signal K to a dubbing unit (e.g., a cassette tape recorder) to stop its operation at the same time the play-back operation of the information reproducing apparatus is stopped. This prevents the dubbing unit from operating idly in its recording mode.

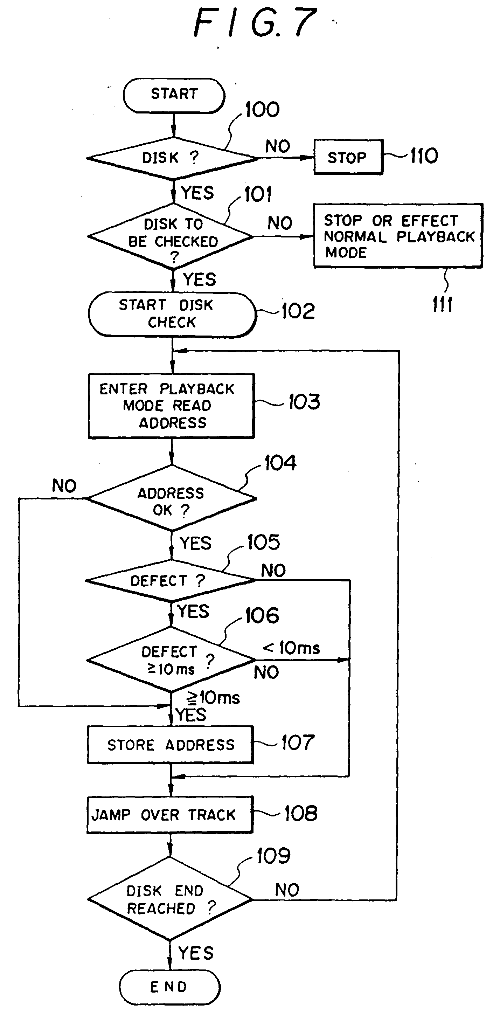

Operation of the information reproducing apparatus shown in FIG. 4 will be described with reference to FIG. 7. First, the reproduction control unit 21 detects whether there is an optical disc 11 on a turntable (not shown) in a step 100. Specifically, when the optical disc 11 is rotated, if the RF signal A is produced by the optical pickup 13, then the reproduction control unit 21 determines that the optical disc 11 is present on the turntable.

If no optical disc is detected, then all operation of the information reproducing apparatus is stopped in a step 110. If there is an optical disc 11 detected on the turntable, then it is determined whether or not the optical disc 11 is to be checked for a defect such as a smear, a damage, or the like thereon in a step 101. The optical disc 11 can be checked for a defect by checking the address data and the RF signal E, as described later on. If the optical disc 11 is not to be checked for a defect, the information reproducing apparatus is stopped in operation or operated in a normal playback mode in a step 111. If the optical disc 11 is to be checked, then control proceeds to a step 102 to start a disc checking process.

After the disc checking process is started in the step 102, the reproduction control unit 21 places the information reproducing apparatus in a playback mode in a step 103. When the recorded information starts to be reproduced from the optical disc 11, the optical pickup 13 outputs an RF signal A to the signal reading unit 14 that processes the RF signal A into a digital signal B, which is demodulated into a demodulated signal C by the demodulator 15. At this time, the demodulated signal is also applied as a signal H to the address data reproducer 19, and address data are reproduced from the demodulated signal H by the address data reproducer 19 in the step 103. The reproduction of the address data by the address data reproducer 19 is monitored by the reproduction control unit 21 in a step 104. If no address data are properly reproduced, control jumps from the step 104 to a step 107. More specifically, a failure of the address data reproducer 19 to reproduce the address data properly indicates that the optical pickup 13 is subjected to a track jump, failing to generate the RF signal A. The step 104 for determining whether the address data are properly reproduced from the demodulated signal H is therefore effective to detect a defect on the optical disc 11. In the step 107, the address memory 20 stores the address data I of the demodulated signal H immediately before the address data fails to be properly reproduced. While the reproduced information is being dubbed, the reproduction control unit 21 refers to the address data I stored in the address memory 20 immediately before the address data fails to be properly reproduced, and sends the reproduction control signal L (see FIG. 4) to inhibit the reproduction of the recorded information belonging to the stored address data I, and/or the display control signal M (see FIG. 4) to display the corresponding address on the display unit 22, so that any useless and wasteful recording can be avoided.

If the address data I is properly reproduced from the demodulated signal H in the step 104, the control goes to a step 105 to detect a defect on the optical disc 11 according to a method other than the checking of the address data. In the step 105, the defect detector 17 detects whether the RF signal E from the signal reading unit 14 contains a defect region DFT or not. If no defect region DFT is detected, then control jumps to a step 108 in which the optical pickup 13 jumps over a track. If a defect region DFT is detected in the step 103, then the defect detector 17 supplies a defect signal F to the decision unit 18. The decision unit 18 applies a decision signal G to the address memory 20 if the defect region DFT is serious enough to adversely affect the reproduced information. More specifically, in a step 106, the decision unit 18 determines whether the defect region DFT continues for a time of at least 10 ms or not. If the duration of the defect region DFT is less than 10 ms, then control jumps from the step 106 to the step 108. If the duration of the defect region DFT is 10 ms or longer, then the address data I of the position where the defect region DFT is located is stored in the address memory 20 in a step 107. Thereafter, control proceeds from the step 107 to the step 108 in which the optical pickup 13 jumps over a track. Then, the above operation sequence is repeated with respect to all the recorded information of the optical disc 11 until the end of the optical disc 11 is reached in a step 109.

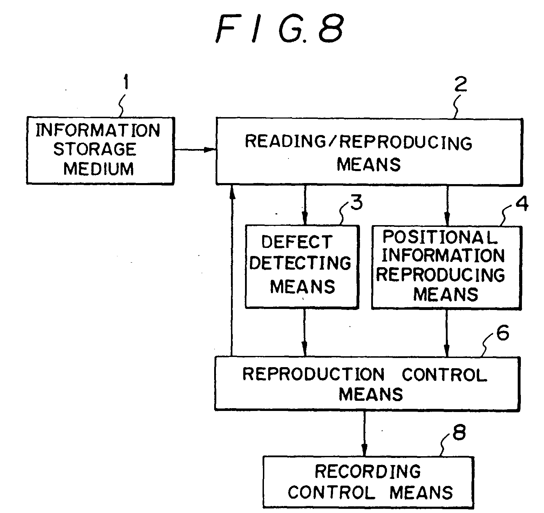

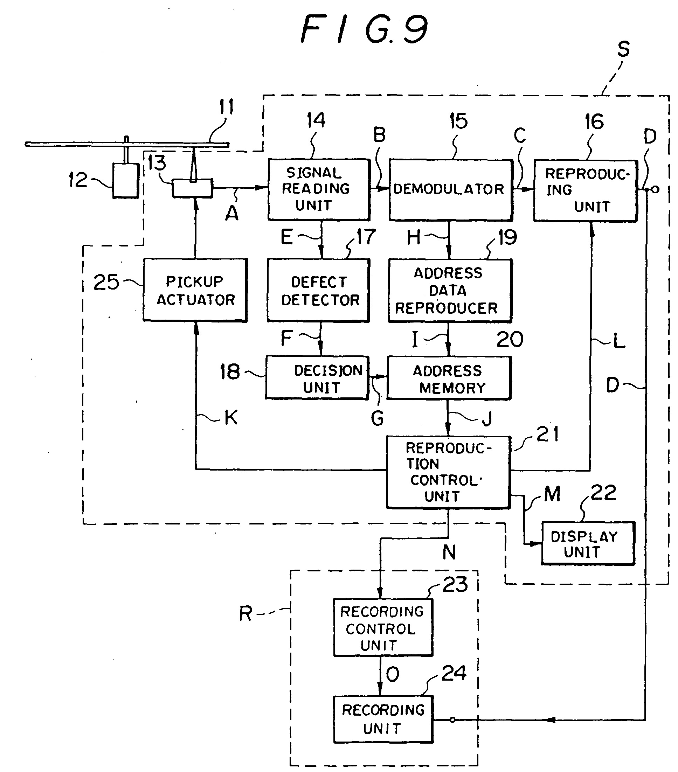

In FIG. 4, the analog reproduced signal D outputted from the reproducing unit 16 is sent to a recording device such as a cassette tape recorder for dubbing. However, as shown in FIGs. 8 and 9, the information reproducing apparatus has integrally therein a recording (dubbing) section R for dubbing an information reproduced by a reproducing section S. The reproducing section S has the same construction as the examples mentioned above. The recording section S corresponds to the cassette tape recorder and has a recording control unit 23 (a recording control means 8 in FIG. 8) for controlling a recording unit 24 for recording the analog reproduced signal D outputted from the reproducing unit 16 on a recording medium such as a compact cassette tape, a digital audio tape and the like.

That is, the recording control unit 23 receives a recording control signal N, based on a detected defect signal from the defect detecting means 3 and a positional information signal from the positional information reproducing means 4, from the reproduction control unit 21 to output a control signal 0 for controlling the recording unit 24. Thus, the operation of the recording section R can be stopped at the same time when the play-back operation is stopped.

In the illustrated example, the optical disc 11 is searched for any defect while causing the optical pickup 11 to jump over tracks. However, to cover those tracks which are jumped over or skipped, all the tracks of the optical disc 11 may be played back to detect any defect regions DFT.

The information reproducing apparatus according to the present invention may incorporate a peak search function for reducing the time needed to detect defects on the optical disc. With the peak search function performed during operation of the information reproducing apparatus, an accurate peak search is ensured without an erroneous detection of a defect-induced noise as a recorded signal peak.

In the above illustrated example, the detected position of a defect on the optical disc is stored as address information. However, in the case where the optical disc is a CD, a track number or an index number may be detected and stored as information indicative of the position of a defect position may therefore be of any kind depending on the information storage medium used.

As described above, any defect on the information storage medium is detected by the defect detecting means, and the address of the defect is reproduced to control operation of the reading/reproducing means. Therefore, since the information reproducing apparatus can detect the position of the defect as well as the defect itself, the user is prevented from carrying out a wasteful process such as a tape re-editing process when dubbing the reproduced information on a tape.

Although certain preferred examples of the present invention have been shown and described in detail, it should be understood that various changes and modifications may be made therein without departing from the scope of the appended claims.

## Claims

1. An information reproducing and recording system comprising a reproducing section (2,3,4) and a recording section (8), said reproducing section comprising:
reading/reproducing means (2) for reading information from an information storage medium (1) which stores recorded information and positional information indicative of a recording position of the recorded information and for outputting a reproduced signal representative of the recorded information;
defect detecting means (3) for detecting a defect on said information storage medium based on the reproduced signal, and for outputting a defect signal accordingly;
positional information reproducing means (4) for reproducing defect positional information representative of the position of the defect on said information storage medium based on the defect signal;
memory means for storing the defect positional information; and
reproduction control means (6) for controlling the reproduction of said reproducing means based on the defect positional information stored by said memory means;
characterised by said recording section comprising:
recording means (8) for receiving and recording the recorded information reproduced by the reading/reproducing means on an information recording medium (1); and
recording control means (23) for receiving the defect positional information stored by said memory means and controlling the recording by said recording means based on the defect positional information.

2. A system according to claim 1, wherein said reproducing section (2,3,4) further comprises display means (22) for displaying the defect positional information.

3. A system according to claim 1 or 2, wherein said reproduction control means (6) stops the reproduction of the recorded information by the reproducing means (2).

4. A system according to any one of claims 1 to 3, wherein said recording control means (8) stops the recording of the recording information by the recording means (23) simultaneously with the stopping of the reproduction by said reproducing means (2).

## Patentansprüche

1. Informations-Wiedergabe- und -Aufzeichnungssystem, das einen Wiedergabe-Abschnitt (2,3,4) und einen AufzeichnungsAbschnitt (8) umfaßt, welcher Wiedergabe-Abschnitt umfaßt:
Lese/Wiedergabe-Mittel (2) zum Lesen von Information von einem Informations-Speichermedium (1), welches aufgezeichnete Information und für eine Aufzeichnungs-Position der aufgezeichneten Information bezeichnende Positions-Information gespeichert enthält, und zum Ausgeben eines für die aufgezeichnete Information bezeichnenden Wiedergabe-Signals;
Defekt-Erfassungsmittel (3) zum Erfassen eines Defektes an dem Informations-Speichermedium aufgrund des wiedergegebenen Signals und zum entsprechenden Ausgeben eines Defektsignals;
Positionsinformations-Wiedergabemittel (4) zum Wiedergeben von für die Position des Defekts an dem Informations-Speichermedium reprasentativer Defektpositions-Information aufgrund des Defektsignals;
Speichermittel zum Speichern der Defektpositions-Information; und
Wiedergabe-Steuermittel (6) zum Steuern der Wiedergabe des Wiedergabemittels aufgrund der durch das Speichermittel gespeicherten Defektpositions-Information;
**dadurch gekennzeichnet**, daß der Aufzeichnungsabschnitt umfaßt:
Aufzeichnungsmittel (8) zum Empfangen und Aufzeichnen der durch das Lese/Wiedergabe-Mittel wiedergegebenen aufgezeichneten Information an einem Informations-Aufzeichnungsmedium (1); und
Aufzeichnungs-Steuermittel (23) zum Empfangen der durch das Speichermittel gespeicherten Defektpositions-Information und zum Steuern der Aufzeichnung durch das Aufzeichnungsmittel aufgrund der Defektpositions-Information.

2. System nach Anspruch 1, bei dem der Wiedergabeabschnitt (2, 3, 4) weiter Anzeigemittel (22) zum Anzeigen der Defektpositions-Information umfaßt.

3. System nach Anspruch 1 oder 2, bei dem das Wiedergabe-Steuermittel (6) die Wiedergabe der aufgezeichneten Information durch das Wiedergabemittel (2) anhält.

4. System nach einem der Ansprüche 1 bis 3, bei dem das Wiedergabe-Steuermittel (8) das Aufzeichnen der Aufzeichnungs-Information durch das Aufzeichnungsmittel (23) gleichzeitig mit dem Anhalten der Wiedergabe durch das Wiedergabemittel (2) anhält.

## Revendications

1. Système de reproduction et d'enregistrement d'information comprenant une section de reproduction (2, 3, 4) et une section d'enregistrement (8), ladite section de reproduction comprenant :
un moyen de lecture/reproduction (2) pour lire une information sur un support de stockage d'information (1) qui stocke une information enregistrée et une information de position indicative d'une position d'enregistrement de l'information enregistrée et pour émettre en sortie un signal reproduit représentatif de l'information enregistrée;
un moyen de détection de défaut (3) pour détecter un défaut sur ledit support de stockage d'information sur la base du signal reproduit et pour émettre en sortie un signal de défaut en conséquence ;
un moyen de reproduction d'information de position (4) pour reproduire une information de position de défaut représentative de la position du défaut sur ledit support de stockage d'information sur la base du signal de défaut ;
un moyen de mémoire pour stocker l'information de position de défaut ; et
un moyen de commande de reproduction (6) pour commander la reproduction dudit moyen de reproduction sur la base de l'information de position de défaut stockée par ledit moyen de mémoire,
caractérisé en ce que ladite section d'enregistrement comprend :
un moyen d'enregistrement (8) pour recevoir et enregistrer l'information enregistrée reproduite par le moyen de lecture/reproduction sur un support d'enregistrement d'information (1) ; et
un moyen de commande d'enregistrement (23) pour recevoir l'information de position de défaut stockée par ledit moyen de mémoire et pour commander l'enregistrement par ledit moyen d'enregistrement sur la base de l'information de position de défaut.

2. Système selon la revendication 1, dans lequel ladite section de reproduction (2, 3, 4) comprend en outre un moyen d'affichage (22) pour afficher l'information de position de défaut.

3. Système selon la revendication 1 ou 2, dans lequel ledit moyen de commande de reproduction (6) arrête la reproduction de l'information enregistrée par le moyen de reproduction (2).

4. Système selon l'une quelconque des revendications 1 à 3, dans lequel ledit moyen de commande d'enregistrement (8) arrête l'enregistrement de l'information d'enregistrement par le moyen d'enregistrement (23) simultanément à l'arrêt de la reproduction par ledit moyen de reproduction (2).
